# EUROPÄISCHE PATENTSCHRIFT

(11) **EP 0 619 638 B1**
(45) Veröffentlichungstag und Bekanntmachung des Hinweises auf die Patenterteilung: **01.07.1998**
(21) Anmeldenummer: 94104139.4
(22) Anmeldetag: 17.03.1994
(51) Int. Cl.: H02K 23/54, H02K 3/26

(54) **Elektrische Scheibenläufer-Maschine**
An electrical machine with a disk armature
Machine électrique avec rotor en disque

(30) Priorität: 03.04.1993 DE 9305152 U; 03.04.1993 DE 9305153 U
(43) Veröffentlichungstag der Anmeldung: 12.10.1994
(73) Patentinhaber: Knoerzer, Karl-Heinz, D-79235 Vogtsburg/Achkarren (DE)
(72) Erfinder: Knoerzer, Karl-Heinz, D-79235 Vogtsburg/Achkarren (DE)
(74) Vertreter: Schmid, Rudolf, Dipl.-Ing., Patentanwalt

(56) Entgegenhaltungen:
- DE-B- 1 233 478
- DE-B- 1 243 772
- GB-A- 2 097 597

## Beschreibung

Die Erfindung betrifft einen Rotor einer elektrischen Scheibenläufer-Maschine nach dem Oberbegriff des Anspruchs 1.

Das Prinzip einer elektrischen Scheibenläufer-Maschine ist seit langem bekannt, wie beispielsweise dem Fachbuch C. Clément "Construction des Bobinages Electriques", 13. Auflage, Dunod, Paris, 1942, Seite 68 zu entnehmen ist.

Eine elektrische Scheibenläufer-Maschine mit einer gattungsgemäßen Antriebswelle ist aus der FR-PS 1 232 438 bekannt. Der scheibenförmige Rotor ist dort kraftschlüssig in eine Rotorhalterung eingesteckt, welche die Antriebswelle, wiederum eine kraftschlüssige Verbindung herstellend, mantelförmig umschließt. Aufgrund der speziellen Bauweise des Rotors einer elektrischen Scheibenläufer-Maschine, wie sie in der FR-PS 1 232 438 beschrieben ist, muß die Rotorhalterung aus einem isolierenden Material bestehen: Der Rotor ist selbsttragend aus einer Vielzahl von umfangsverteilt angeordneten Spulenelementen gebildet. Die Verbindung zwischen der Antriebswelle und den Spulenelementen, die den Rotor bilden, darf deshalb selbstverständlich nicht elektrisch leitend sein.

Dadurch ergeben sich zwei Hauptprobleme:
Der Kraftschluß zwischen Rotor und Isolator einerseits, sowie der Kraftschluß zwischen Isolator und Welle andererseits ist, vor allem bei wirkenden Drehmomenten in der Größenordnung von mehreren Nm, nicht dauerhaft zu bewerkstelligen. Ferner läßt eine solche Konstruktion nach dem Stand der Technik durch die geringe Seitenführungskraft der Rotorhalterung, die teils aus der kleinen Berührungsfläche, teils aus den Materialeigenschaften der üblichen Isolatoren resultiert, ein in engen Toleranzen stabiles Bewegungsverhalten des Rotors nicht zu. Eine hohe Stabilität gegen Schwingungsbewegungen der Rotorscheibe in axialer Richtung ist bei Scheibenläufer-Maschinen jedoch notwendig, um die Magnetpole des Stators möglichst nahe an den Rotor heranbringen zu können; ein möglichst kleiner Abstand zwischen Magnetpolen und Rotor ist Voraussetzung für einen guten Wirkungsgrad der Scheibenläufer-Maschine.

Ein Rotor für eine elektrische Scheibenläufer-Maschine ist insbesondere aus der FR-PS 1 426 280 bekannt. Die Spulenelemente des Rotors werden dort durch entsprechend geformte und gebogene Blechbänder gebildet, die sich jeweils über verschiedene, zur Rotorwelle senkrechten Ebenen erstrecken. Der Kommutator wird dabei durch die radial innenliegenden Teile der radialen Spulenelementabschnitte gebildet; die Bürsten schleifen auf der Flachseite der Blechbänder.

Bei einer Konstruktion nach diesem Stand der Technik ergibt sich jedoch durch die vergleichsweisen großen und ungleichmäßig geformten Spalte zwischen den Kommutatorblechen ein hoher Verschleiß der Bürsten.

Demzufolge sind elektrische Scheibenläufer-Maschinen nach dem Stand der Technik sowohl im Hinblick auf den Bürstenverschleiß, als auch im Hinblick auf die Kraftübertragung auf die Antriebswelle, vor allem bei größeren Drehmomenten, und damit auch im Hinblick auf die seitliche Führung der Rotorbewegung durch die Antriebswelle, verbesserungsbedürftig.

GB-A-2 097 597 offenbart einen Rotor mit zwei metallischen Scheiben. Der Rotor ist auf einer Nabe gehalten. Eine Antriebswelle verläuft durch eine zentrale Bohrung der Nabe. Eine Scheibe ist zwischen den zwei metallischen Scheiben und angeordnet im Bereich eines Kommutators des Rotors. Der Rotor ist über einen Ring mit der Nabe verbunden.

DE-B 1 243 772 offenbart einen Kommutator einer Rotorscheibe, der an einem Teil einer Nabe anliegt, die einen isolierenden Ring aufweist, der mit der Rotorscheibe verbunden ist.

DE-A 2 314 591 offenbart einen Läufer mit gestanzten, lamellenförmigen Leitern und separatem Kollektor.

Nachteilig bei dem genannten Stand der Technik ist es, daß die Isolierung der Spulenelemente im Kommutatorbereich aufwendig und versagensanfällig ist.

Der Erfindung liegt also die Aufgabe zugrunde, eine gattungsgemäße elektrische Scheibenläufer-Maschine unter den Gesichtspunkten Wirkungsgrad und Verschleißbeständigkeit zu verbessern.

Diese Aufgabe wird erfindungsgemäß durch einen Rotor mit den Merkmalen des Anspruchs 1 gelöst.

Danach wird ein Rotor einer elektrischen Scheibenläufer-Maschine geschaffen, der mindestens eine senkrecht zur Wellenachse einer Antriebswelle stehende Mitnehmerscheibe zur form- und/oder kraftschlüssigen Verbindung mit dem Rotor aufweist, wobei der Rotor eine selbsttragende Konstruktion aus mehreren, umfangsverteilt angeordneten, lamellenartigen Spulenelementen ist, die jeweils radial außen und radial innen leitend miteinander verbunden sind, wobei der Kommutator aus einem ringförmigen Abschnitt einer Rotorstirnseite besteht, und wobei zwischen Rotor und Antriebswelle eine Isolationsschicht angeordnet ist.

Eine solche, erfindungsgemäße Mitnehmerscheibe kann einen vergleichsweise großen Bereich einer Rotorstirnseite überdecken. So übt sie auf den sich bewegenden Rotor eine hohe Seitenführungskraft aus; außerdem erhöht sie die Haltbarkeit der Rotor-Antriebswellen-Verbindung insbesondere bei Drehmomenten von mehreren Nm wesentlich.

Durch beispielsweise gegeneinander Verspannen zweier erfindungsgemäßer Mitnehmerscheiben an den beiden Rotorstirnseiten kann trotz zwischenliegender Isolationsschicht eine dauerhafte, kraftschlüssige Verbindung zwischen Rotor und Antriebswelle geschaffen werden; eine ausreichend große Dimensionierung der Mitnehmerscheibe hält die Kräfte an der Verbindungsfläche von Mitnehmerscheibe und Rotor in beherrschbaren Grenzen.

Eine nochmals stark verbesserte Kraftübertragung entsteht durch eine formschlüssige Verbindung zwischen Mitnehmerscheibe und Rotor. Auch größere Drehmomente können so problemlos übertragen werden. Durch geeignete Dimensionierung der formschlüssig ineinandergreifenden Teile der Mitnehmerscheibe und des Rotors fällt eine möglicherweise wenig formbeständige, zwischenliegende Isolationsschicht nicht negativ ins Gewicht.

Vorzugsweise wird als Material für die Isolationsschicht ein Kunststoff, insbesondere ein Duroplast verwendet. Duroplasten sind genügend form- und verschleißbeständig, um eine formschlüssige Verbindung zwischen Mitnehmerscheibe und Rotor sogar indirekt, ohne formschlüssige Verzahnung dieser beiden Teile, herzustellen.

Ein solcher Duroplast besteht vorteilhafterweise aus einer glasfaserverstärkten Epoxidharzmischung. Eine glasfaserverstärkte Epoxidharzmischung kann als Stäbchenpreßmasse heiß in die Form gepreßt werden, und ist somit leicht verarbeitbar.

Die Vorteile einer solchen formbeständigen Isolationsschicht entfalten sich besonders dann, wenn sie einerseits mit der Mitnehmerscheibe mittels Erhöhungen und Aussparungen formschlüssig verbunden ist, andererseits Mitnehmernasen aufweist, die in die Rotorstirnseite eingreifen. So wird die Verzahnung zwischen Mitnehmerscheibe und Rotor, insbesondere bei Verwendung einer heiß formpreßbaren Epoxidharzmischung, durch einen sehr einfachen Prozeß indirekt herstellbar.

Weitere Vorteile ergeben sich, wenn diese Mitnehmernasen entsprechend dem Verlauf der Spuleneleientabschnitte im Berührungsbereich der Rotorstirnseite geformt sind: Bestehen diese Spulenelemente beispielsweise aus Profilblechen, können die nötigen Vertiefungen zur Aufnahme der Mitnehmernasen schon vor dem Zusammenbau der Profilbleche zu einem Rotor in die Blechform integriert werden. Ein Nachbehandeln des fertigen Rotors zum Zweck der Antriebswelleneinpassung wird somit überflüssig.

Zweckmäßigerweise ist im Umfang des Getriebeanschlußabschnitts der Antriebswelle mindestens eine Nut vorhanden. Mittels dieser Nut oder dieser Nuten kann eine einfache, formschlüssige Verbindung mit einem an die elektrische Scheibenläufer-Maschine angeschlossenen Getriebe hergestellt werden.

Weist der Getriebeanschlußabschnitt der Antriebswelle im Bereich der Nut eine Querschnittsverjüngung auf, zweckmäßigerweise so, daß die Nut im querschnittsverjüngten Bereich egalisiert wird, so können Maschine und Getriebe auf einfache Weise unter Herstellung einer formschlüssigen Verbindung ineinandergesteckt werden.

Nach einer bevorzugten Ausgestaltung nach der Erfindung ist lediglich eine Mitnehmerscheibe starr mit der Antriebswelle verbunden; der rotorseitigen Fläche dieser Mitnehmerscheibe gegenüberliegend ist eine Konterscheibe axial verschiebbar und fixierbar auf der Antriebswelle befestigt. Mit dieser verschiebbaren Konterscheibe kann eine Preßpassung zwischen Mitnehmerscheibe und Rotor, sowie zwischen Konterscheibe und Rotor vorgenommen werden.

Das hat selbstverständlich bei der kraftschlüssigen Verbindung zwischen Mitnehmerscheibe, bzw. Konterscheibe, und Rotor eine vorteilhafte Wirkung, aber auch bei einer formschlüssigen Verbindung von Mitnehmerscheibe und Rotor ergeben sich Vorteile durch die Preßpassung, insbesondere bei den Seitungsführungseigenschaften der Mitnehmerscheibe.

Die axial verschiebbare und fixierbare Befestigung der Konterscheibe auf der Antriebswelle kann durch ein Innengewinde in der Konterscheibe und ein zugehöriges Außengewinde in der Antriebswelle, die ineinander eingreifen, vorgenommen werden.

Alternativ dazu kann die Konterscheibe mit einer Konterplatte verbunden werden, welche das konterscheibenseitige Ende der Antriebswelle überdeckt und in welche eine Schraube eingelassen ist, die in eine Zentralbohrung der Antriebswelle hineinragt und dort in ein Innengewinde eingreift. Gegenüber der mutterartigen Befestigung der Konterscheibe auf einem Außengewinde der Antriebswelle hat das den Vorteil, daß die axiale Verschiebung der Konterscheibe zum Zweck der Preßpassung nicht mit einer Drehung der Konterscheibe verbunden ist.

Zweckmäßigerweise ist die Konterscheibe zur zugehörigen Rotorstirnseite hin mit einer Isolatorschicht bedeckt. Die Konterscheibe kann somit auch aus einem leitenden Material, insbesondere einem Metall bestehen.

Die Lagerung der Antriebswelle im Statorgehäuse einer elektrischen Scheibenläufer-Maschine erfolgt zweckmäßigerweise mittels Kugel lagern. Es ist dabei von Vorteil, daß die Antriebswelle mindestens je eine Wulst und/oder eine Nut zur Befestigung jeweils eines Kugellagers aufweist. Somit ist die Führung der Antriebswelle, und damit auch des Rotors, gegen axiales Verschieben gewährleistet.

Besonders vorteilhaft ist es, wenn, bei der Ausführungsform der erfindungsgemäßen Antriebswelle mit Konterscheibe und Konterplatte, eines der Kugellager zwischen Konterscheibe und Konterplatte gesetzt wird, denn durch das Anziehen der zentralen Schraube der Konterplatte wird die Konterplatte gegen das Kugellager, das Kugellager gegen die Konterscheibe und die Konterscheibe gegen den Rotor gepreßt; eine gesonderte Befestigungsvorrichtung für das Kugellager durch Wulste oder Nuten auf der Antriebswelle entfällt somit. Falls die Preßpassung, beispielsweise durch eine Ermüdungserscheinung der Isolationsschicht zwischen Mitnehmerscheibe, bzw. Konterscheibe, und Rotor mit der Zeit nachläßt, ist so sogar eine Nachstellung durch Anziehen der Zentralschraube möglich, ohne die Seitenführung durch die Lagerung der Antriebswelle zu gefährden.

Die Verbindung der erfindungsgemäßen Antriebswelle mit dem Stator einer elektrischen Scheibenläufer-Maschine erfolgt vorzugsweise dann durch die Einpassung des mitnehmerscheibenseitigen Kugellagers in die eine Statorgehäusehälfte, durch die Einpassung des konterscheibenseitigen Kugellagers in die Bürstenhalterung, die wiederum mit der anderen Statorgehäusehälfte verbunden ist. So wird mit einfachen konstruktiven Maßnahmen eine stabile Führung des Rotors im Statorgehäuse hergestellt.

Die Aufgabe wird auch erfindungsgemäß durch einen Rotor für eine elektrische Scheibenläufer-Maschine gelöst, wobei im Rotor mehrere, in ihrer radialen Winkelstellung gegeneinander verdrehte, gegeneinander isolierte, stromführende Spulenelemente in einer oder in mehreren verschiedenen, zur Rotorachse senkrechten Ebene angeordnet sind, wobei die Spulenelemente je mindestens einen radialen Abschnitt aufweisen, der einen äußeren und einen inneren Spulenelementabschnitt verbindet, wobei jeweils mindestens zwei Spulenelemente zu einer über den Umfang des Rotors verteilten Gruppe zusammengefaßt werden können und jedes Spulenelement mit den benachbarten Spulenelementen der betreffenden Gruppe jeweils radial außenliegend und gegebenenfalls radial innenliegend leitend verbunden ist, wobei der Kommutator durch die auf einer der beiden Rotorstirnseiten liegenden Oberflächen der radial inneren Spulenelementabschnitte gebildet ist, und wobei die Spulenelementabschnitte des Kommutators konisch geformte Oberflächen aufweisen, so daß die Kanten des Isolationsspalts zwischen je zwei benachbarten Spulenelementabschnitten mindestens im gesamten Kontaktbereich der Bürsten parallel verlaufen.

Mit dieser Konstruktion erhält man nicht nur eine größere Kontaktfläche zwischen Bürste und Kommutator-Spulenelementabschnitt, wodurch sich eine bessere Stromübertragung und somit ein besserer Wirkungsgrad ergibt; durch den parallelen Verlauf des Isolationsspalts im gesamten Kontaktbereich der Bürsten ist es außerdem möglich, diesen Isolationsspalt ebenfalls im gesamten Kontaktbereich möglichst dünn zu halten - so kann der Bürstenverschleiß wesentlich verringert werden.

Darüber hinaus bietet die parallele Ausformung der Isolationsspalte eine wesentliche Vereinfachung bei der Herstellung des erfindungsgemäßen Rotors: Der Isolationsspalt wird normalerweise ausgefräst, um zu gewährleisten, daß die Bürste ausschließlich mit den Oberflächen der Spulenelemente Kontakt hat; dabei ist ein parallel verlaufender Isolationsspalt naturgemäßeinfacher auszufräsen als ein anders geformter.

In einer bevorzugten Ausführungsform des erfindungsgemäßen Flach-Rotors ist zwischen den radialen Abschnitten der Spulenelemente ferromagnetisches Material angeordnet. Dieses ferromagnetische Material führt aufgrund seiner hohen magnetischen Suszeptibilität die Magnetfelder zwischen den im Statorgehäuse gegenüberliegend angebrachten Magnetpolen und erhöht so den Wirkungsgrad einer elektrischen Maschine, in die der erfindungsgemäße Flach-Rotor eingebaut ist, ganz erheblich.

Als ferromagnetisches Material können dabei Dynamobleche verwendet werden.

Eine weitere bevorzugte Ausführungsform des erfindungsgemäßen Flach-Rotors besteht in der Verwendung von Profilblechen als Spulenelemente; diese Profilbleche können dabei aus Kupfer bestehen. Die Verwendung von Profilblechen ermöglicht ein einfaches Herstellungsverfahren und macht aufgrund der hohen Eigenstabilität der Bleche, und damit der Spulenelemente, ein aufwendiges Tragegerüst des Rotors überflüssig.

Die Zentrierung und Fixierung der Profilbleche mit einem oder mehreren Spannringen erhöht die Stabilität des Rotors vorteilhaft, da die Profilbleche ein relativ hohes Eigengewicht aufweisen und somit bei der Rotation des Rotors hohen Zentrifugalkräften unterliegen.

Zur Aufnahme dieser Spannringe sind in den Profilblechen zweckmäßigerweise eine oder mehrere Nuten ausgespart, so daß nach dem Zusammenanbau der Profilbleche kein weiterer Arbeitsschritt nötig ist, um die Spannringe einsetzen zu können.

Fixiert man die Profilbleche durch Vergießen mit Gießharz, erzielt man nochmals eine höhere Eigenstabilität des Rotors.

Durch eine hohe Eigenstabiliät ergibt sich ein formtreues und schwingungsarmes Verhalten des Rotors in seiner Bewegung; infolgedessen kann der jeweilige Spalt zwischen dem Rotor und den beiden Statorhälften wirkungsgraderhöhend klein gehalten werden.

Vorteilhafterweise wird die Fixierung der Profilbleche durch Spannringe und/oder durch Gießharz dafür verwendet, den erfindungsgemäßen Flach-Rotor durch selbsttragende Profilbleche herzustellen, d.h. daß der Rotorkörper aus der Gesamtheit der in ihrer Lage zueinander fixierten Profilbleche gebildet wird, ohne zusätzliche tragende Elemente. Dies vermindert den Material- und Konstruktionsaufwand erheblich.

Befindet sich zwischen den radialen Abschnitten der Spulenelemente ferromagnetisches Material, das normalerweise ein hohes spezifisches Gewicht aufweist, ist es bei einem solchen selbsttragenden Flach-Rotor zur weiteren Erhöhung der Stabilität zweckmäßig, daß jeweils im Spalt zwischen den verschiedenen radialen Ebenen der Spulenelemente ein Glasfaserband auf dem ferromagnetischen Material aufliegend ein- oder mehrmals über den gesamten Rotorumfang gewickelt und mit Gießharz vergossen wird. Das Gießharz ergibt nach seinem Aushärten zusammen mit dem Glasfaserband eine hochfeste Verbindung, die den Zentrifugalkräften, die unter Rotation auf das ferromagnetische Material wirken, standhält.

Der erfindungsgemäße Flach-Rotor kann zweckmäßigerweise als Scheibenläufer eines permanent erregten Elektromotors zum Einsatz kommen, aber auch die Umkehrung, der Einsatz des erfindungsgemäßen Flach-Rotors als Scheibenläufer eines permanent erregten Generators ist vorteilhaft; insbesondere beim Einsatz des erfindungsgemäßen Flach-Rotors in einer elektrischen Maschine, die als Antriebsaggregat für ein Kraftfahrzeug dient, kann die alternierende Verwendung dieser elektrischen Maschine als Elektromotor und, je nach Bedarf, als Generator sehr vorteilhaft sein.

Zum Zweck des Gruppierens von Spulenelementen zu einzelnen, über den gesamten Umfang des Flach-Rotors verteilten Spulenelementengruppen ist es zweckmäßig, die einzelnen Spulenelemente mit den jeweils benachbarten Spulenelementen radial außenliegend zu verlöten oder zu verschweißen. Dabei ist es vorteilhaft, je ein u-förmiges Profilblech über jede Löt- bzw. Schweißstelle zu schieben und mitzuverlöten bzw. mitzuverschweißen. Daraus ergibt sich eine höhere Haltbarkeit der Verbindung, aber vor allem wird dadurch beim Verwenden von Profilblechen als Spulenelemente die Verbindung von Spulenelementen verschiedener radialer Ebenen auf konstruktiv einfache Weise hergestellt.

Die Haltbarkeit und Stabilität gegen die Fliehkräfte dieser u-förmigen Profilblechverbindungen wird vorteilhaft dadurch erhöht, daß radial außen ein Glasfaserband über den gesamten Umfang des Rotors gewickelt und mit Gießharz vergossen wird.

Eine besonders einfache, und daher besonders bevorzugte Ausführungsform des erfindungsgemäßen Flach-Rotors mit Profilblechen ergibt sich dadurch, daß die Profilbleche nahezu über ihre ganze Länge in der Breite gespalten sind, so daß je zwei benachbarte, zur selben Spulenelemenentengruppe gehörenden Spulenelemente durch ein- und dasselbe Profilblech gebildet sind. Insbesondere dann, wenn der erfindungsgemäßen Flach-Rotor lediglich zwei radiale Ebenen mit Spulenelementen aufweist, führt dieses Merkmal zu einer konstruktiv senr einfachen Herstellung es Rotors: Eine Hälfte des Profilblechs gehört zur einen Ebene, die anderen Hälfte zur anderen Ebene des Rotors, wodurch sich eine separate, elektrisch leitende Verbindung im radial innenliegenden Teil des Rotors erübrigt.

Weitere Merkmale und Besonderheiten der Erfindung ergeben sich aus den im folgenden näher beschriebenen und in den Zeichnungen dargestellten Ausführungsbeispielen.

Es zeigen:
- Figur 1: die Seitenansicht einer erfindungsgemäßen Antriebswelle,
- Figur 2: eine Aufsicht in Richtung A gemäß Figur 1,
- Figur 3: eine Aufsicht in Richtung B gemäß Figur 1,
- Figur 4: eine Teilaufsicht in Richtung C gemäß Figur 1,
- Figur 5: einen Schnitt D-D gemäß Figur 1.
- Figur 6: die Seitenansicht einer anderen Ausführung der erfindungsgemäßen Antriebswelle,
- Figur 7: eine Teilaufsicht in Richtung F gemäß Figur 6,
- Figur 8: eine Aufsicht in Richtung E gemäß Figur 6,
- Figur 9: die Seitenansicht einer weiteren Ausführungsform der erfindungsgemäßen Antriebswelle,
- Figur 10: die Aufsicht in Richtung G gemäß Figur 9,
- Figur 11: eine schematische Aufsicht auf eine Rotorstirnseite eines gattungsgemäßen Rotors,
- Figur 12: die Seitenansicht einer erfindungsgemäßen Antriebswelle samt dem daran befestigten Rotor,
- Figur 13: einen Teilschnitt durch eine gatttungsgemäße elektrische Scheibenläufer-Maschine mit einer erfindungsgemäßen Antriebswelle.
- Figur 14: die schematische Ansicht einer erfindungsgemäßen Rotorstirnseite,
- Figur 15: zwei zusammengehörende Spulenelemente,
- Figur 16: eine Detaildarstellung des Kommutatorbereichs zweier benachbarter Spulenelemente,
- Figur 17: eine schematische Ansicht wie Figur 14,
- Figur 18: eine weitere schematische Ansicht einer Rotorstirnfläche,
- Figur 19: die Ansicht zweier zusammengehörender Spulenelemente aus einer zur Rotorachse senkrechten Blickrichtung,
- Figur 20: die Grundform eines Profilblechs.

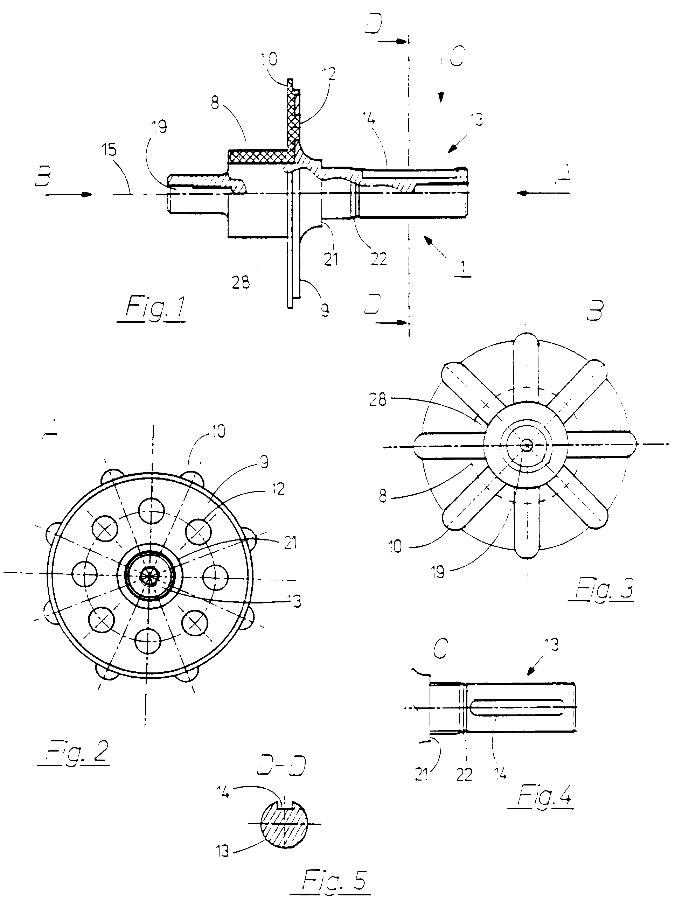

Figur 1 zeigt eine Seitenansicht mit Teilschnitt einer erfindungsgemäßen Antriebswelle 1. Die zur Wellenachse 15 senkrecht stehende Mitnehmerscheibe 9 ist, wie der Rotorsitz 28, mit einer Isolationsschicht 8 bedeckt. Die Isolationsschicht ist durch Aussparungen 12 der Mitnehmerscheibe 9 formschlüssig mit dieser verbunden. Zur Befestigung eines Kugellagers sind die Wulst 21 und die Nut 22 vorgesehen. Im Getriebeanschlußabschnitt 13 der Antriebswelle 1 ist eine Nut 14, die axial verläuft, dargestellt.

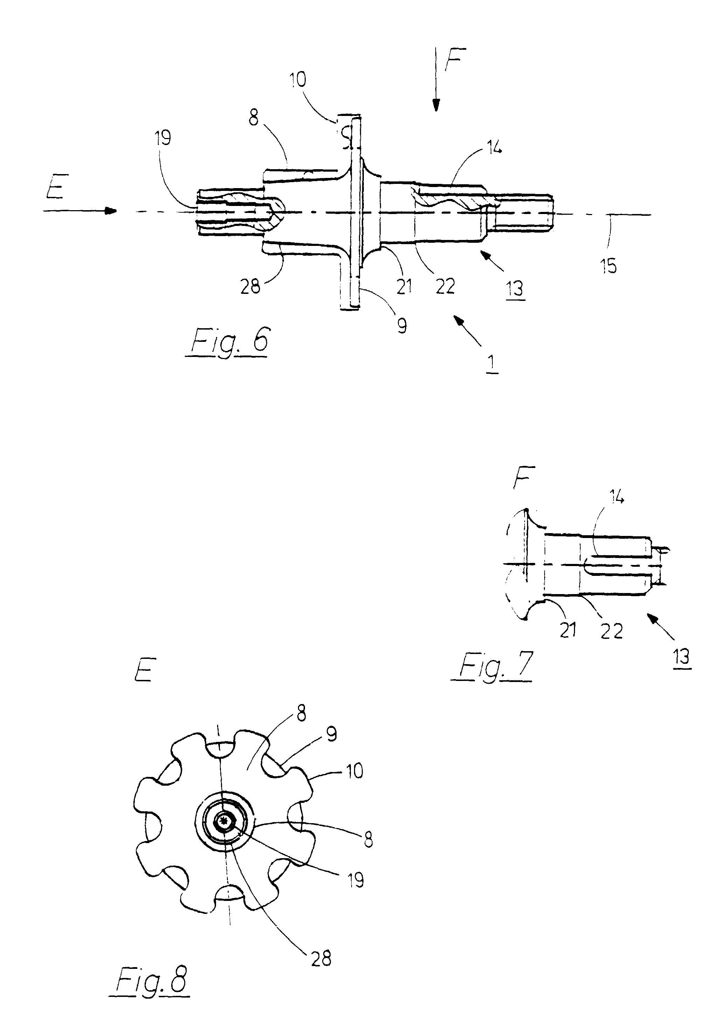

Figur 2 zeigt eine Ansicht in Richtung A der Figur 1. Deutlich sichtbar sind die Wulst 21 zur Fixierung des Kugellagers, die Mitnehmerscheibe 9, die kreisförmigen Aussparungen 12 in der Mitnehmerscheibe zur formschlüssigen Verbindung mit der Isolationsschicht 8, sowie die über die Mitnehmerscheibe 9 hinausragenden Enden der Mitnehmernasen 10, die aus dem Isolationsmaterial hergestellt sind.

Figur 3 zeigt die Ansicht in Richtung B der Figur 1. Hier wird verdeutlicht, daß in diesem Ausführungsbeispiel die Mitnehmernasen 10 sternförmig angeordnet sind. Desweiteren ist der Rotorsitz 28 sichtbar, auf dem die Isolationsschicht 8 angedeutet ist. Auch die Zentralbohrung 19 ist dargestellt.

In Figur 4, der Aufsicht in Richtung C nach Figur 1, ist verdeutlicht, wie die Nut 14, im Getriebeanschlußabschnitt 13 der Antriebswelle 1, angebracht ist. Die Nut 14 dient zur Aufnahme eines formschlüssigen Verbindungsteils 5 des Getriebes. Der Antriebswellenabschnitt, der das Kugellager aufnehmen soll, ist durch die Wulst 21 und die Nut 22 begrenzt.

Figur 5, ein Schnitt D-D nach Figur 1, zeigt die Nut 14 nochmals in einer anderen Darstellung.

Figur 6 zeigt eine Darstellung wie Figur 1, jedoch eines anderen Ausführungsbeispiels der erfindungsgemäßen Antriebswelle. Der Getriebeanschlußabschnitt 13 der Antriebswelle 1 zeigt hier im Bereich der Nut 14 eine Querschnittsverjüngung derart, daß die Nut 14 im querschnittsverjüngten Bereich egalisiert ist. Dadurch kann die formschlüssige Verbindung zu einem Getriebe durch einfaches Aufstecken desselben erfolgen. Der Rotorsitz 28 ist leicht konisch gehalten, was durch die Isolationsschicht 8 ausgeglichen wird. Die Mitnehmerscheibe 9 ist mit der Isolationsschicht 8 kraftschlüssig verbunden; die Mitnehmernasen 10 sind in diesem Ausführungsbeispiel zahnradartig geformt.

Figur 7 verdeutlicht nochmals, in einer Ansicht in Richtung F nach Figur 6, den Sitz der Nut 14 und die Querschnittsverjüngung im Getriebeanschlußabschnitt 13, sowie den Sitz eines Kugellagers zwischen der Wulst 21 und der Nut 22.

Figur 8, eine Ansicht in Richtung E der Figur 6, verdeutlicht die zahnradartige Ausformung der Mitnehmernasen 10 dieses Ausführungsbeispiels. Auch hier werden die Mitnehmernasen 10 durch die Isolationsschicht 8 gebildet und ragen mit ihren Spitzen über die Mitnehmerscheibe 9 hinaus. Ferner sind die Zentralbohrung 19, die Kante des Rotorsitzes 28 und die Kante der Isolationsschicht 8 im Rotorsitzbereich dargestellt.

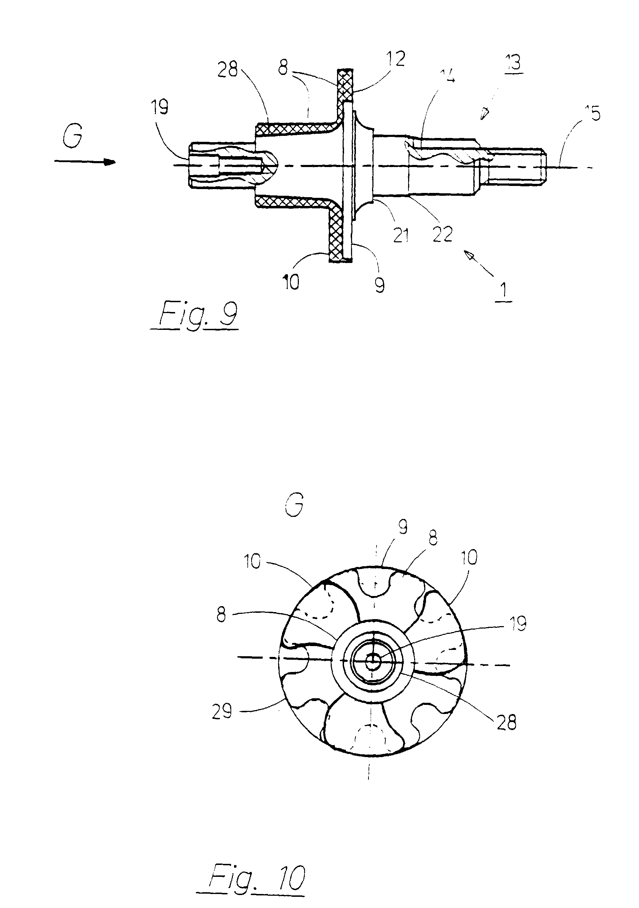

Figur 9 zeigt die Seitenansicht einer weiteren Ausführungsform der erfindungsgemäßen Antriebswelle 1. Der Getriebeanschlußabschnitt 13 ist dabei wie im obigen Ausführungsbeispiel gestaltet, ebenso der Rotorsitz 28. Die Form der Mitnehmernase 10 ist jedoch verschieden, ebenso sind im Unterschied zum vorangehenden Beispiel die Aussparungen 12 in der Mitnehmerscheibe 9 zur formschlüssigen Verbindung mit der Isolationsschicht 8 dargestellt.

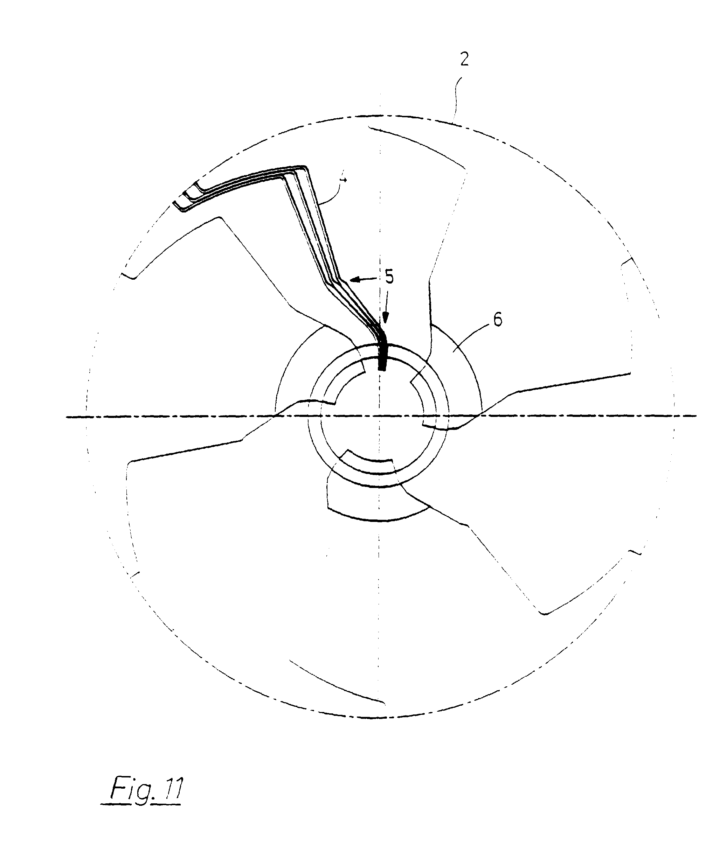

Figur 10, eine Ansicht in Richtung G nach Figur 9, verdeutlicht diesen Unterschied: Die Mitnehmernasen 10 sind entsprechend dem Verlauf der mit ihnen im Eingriff befindlichen Spulenelementen des Rotors geformt. Ferner ist in Figur 10 die Eingriffskontur 29 der Isolationsschicht 8 in die Mitnehmerscheibe 9 dargestellt, welche diesmal zahnradartig geformt ist. Die Isolationsschicht 8 ist somit also sowohl mit der Mitnehmerscheibe 9, als auch mit dem Rotor über die Mitnehmernasen 10 formschlüssig verbunden.

Die Konturen der, zu den in Figur 10 dargestellten Mitnehmernasen 10 passenden, Spulenelemente 4 eines Rotors 2, sind in Figur 11, einer schematischen Darstellung einer Rotorstirnseite 7, verdeutlicht.

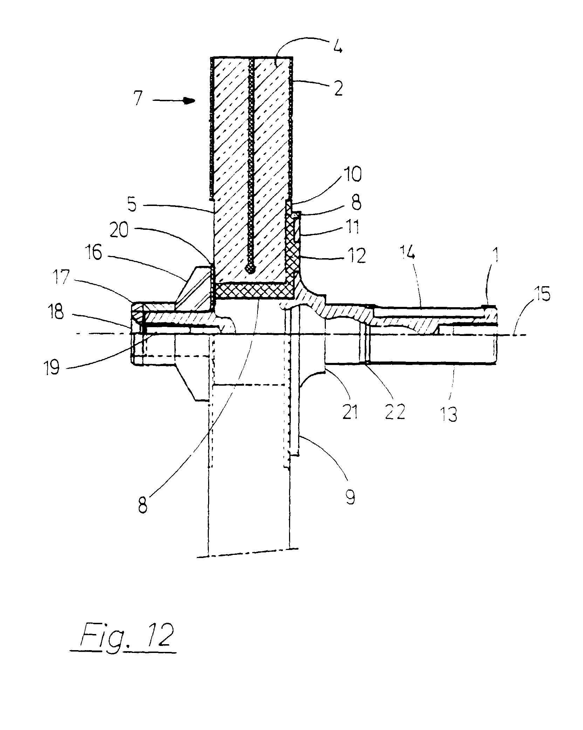

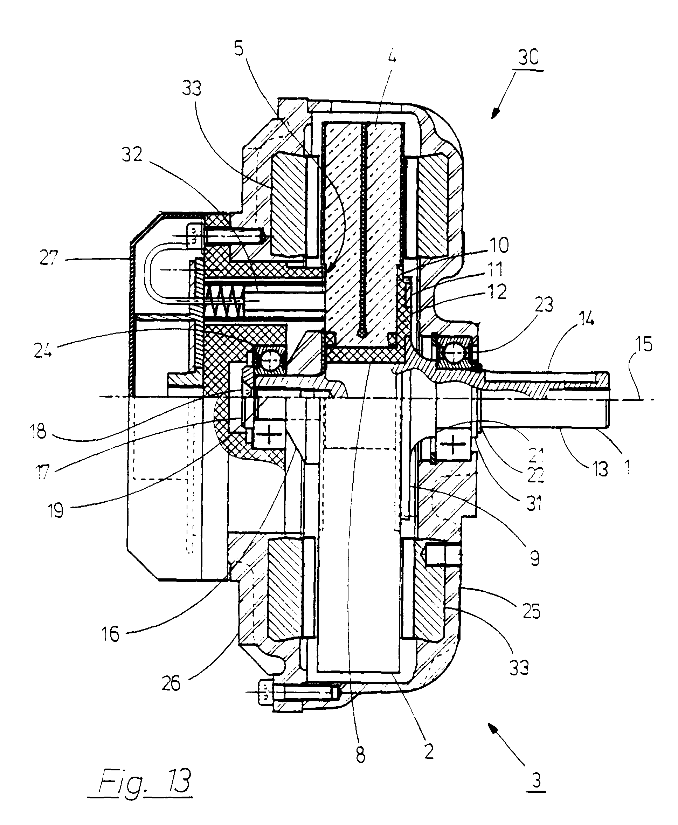

Figur 12 zeigt eine erfindungsgemäße Antriebswelle 1 in Verbindung mit dem Rotor 2 von und zu dem sie das Drehmoment übertragen soll. Auf der zur Rotorachse 15 senkrecht stehenden Mitnehmerscheibe 9 ist eine Isolationsschicht 8 aufgebracht, die einerseits, mittels Erhöhungen 11 und Aussparungen 12 in der Mitnehmerscheibe 9, mit der Mitnehmerscheibe 9, andererseits, mittels Mitnehmernasen 10, mit dem Rotor 2 formschlüssig verbunden ist. Somit steht die Mitnehmerscheibe 9 indirekt formschlüssig mit dem Rotor 2, bzw. seinen Spulenelementen 4 formschlüssig in Verbindung. Die der Mitnehmerscheibe 9 gegenüberliegende Rotorstirnseite 7 steht über eine Isolatorschicht 20 mit der Konterscheibe 16 in Berührung. Die Konterscheibe 16 ist ihrerseits mit einer Konterplatte 17 verbunden, welche mittels einer Schraube 18, die in ein Innengewinde in der Zentralbohrung 19 der Antriebswelle 1 eingreift, durch Festziehen zum Rotor 2 hin bewegt wird. So wird die Konterscheibe 16 auf den Rotor 2 gepreßt, und übt damit indirekt einen Anpreßdruck des Rotors 2 gegen die Mitnehmerscheibe 9 aus, so daß die Antriebswelle 1 durch eine Preßpassung mit dem Rotor 2 form- und kraftschlüssig verbunden ist.

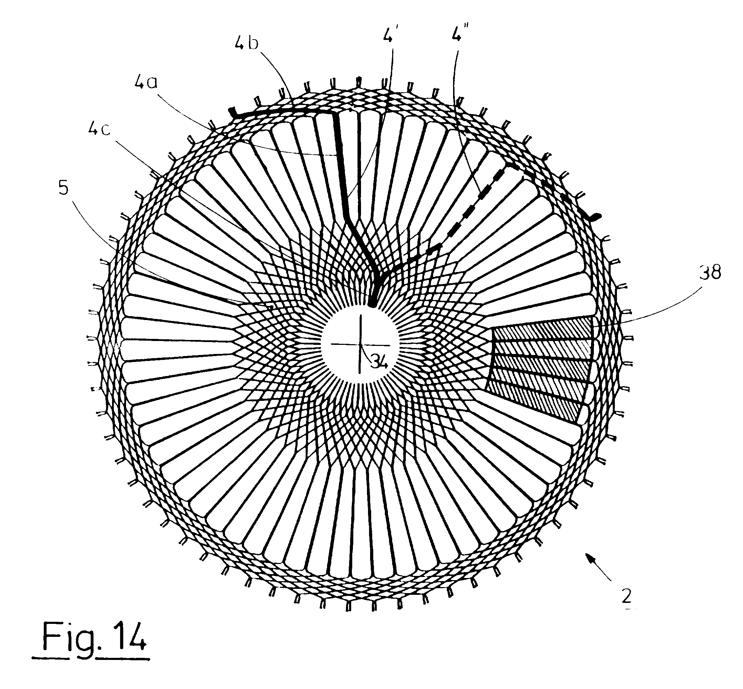

Figur 13 verdeutlicht, wie der in Figur 12 dargestellte Komplex von Antriebswelle 1 und Rotor 2 über die Kugellager 23 und 24 mit einem Stator 30 einer Scheibenläufer-Maschine 3 verbunden wird. Das Kugellager 23 wird dabei von der Wulst 21 und von Befestigungsscheiben 31, die in die Nut 22 eingreifen, festgehalten. Das Kugellager 24 dagegen ist zwischen der Konterplatte 17 und der Konterscheibe 16 eingespannt. Außer den unter Figur 12 beschriebenen Merkmalen sind in Figur 13 noch die Bürstenhalterung 27 mit den darin befindlichen Bürsten 32, die auf dem Kommutator 5 schleifen, sowie die Statorgehäusehälften 25 und 26 mit den darin angeordneten Magnetpolen 33 dargestellt.

Figur 14 zeigt schematisch einen erfindungsgemäßen Rotor, insbesondere den Verlauf der Spulenelemente 4. Die Spulenelemente 4 sind hier in zwei verschiedenen, zur Rotorachse 34 senkrechten Ebenen angeordnet, wobei eine erste Ebene durch die Spulenelemente 4' und eine zweite Ebene durch gleichartige, jedoch spiegelbildlich angeordnete Spulenelemente 4'' definiert wird. Die Spulenelemente bestehen aus einem radialen Spulenelementabschnitt 4a, einem äußeren Spulenelementabschnitt 4b und einem inneren Spulenelementabschnitt 4c. Die besonders gekennzeichneten Spulenelemente 4' und 4'' bestehen aus ein- und demselben Profilblech und sind radial innenliegend leitend verbunden. Die radial inneren Spulenelementabschnitte 4c bilden in ihrer Gesamtheit den Kommutator 5. Das ferromagnetische Material 38, das sich zwischen den radialen Spulenelementabschnitten 4a befindet, ist hier beispielhaft an fünf Zwischenräumen zwischen den jeweils in verschiedenen Ebenen liegenden Spulenelementen 4', 4'' dargestellt.

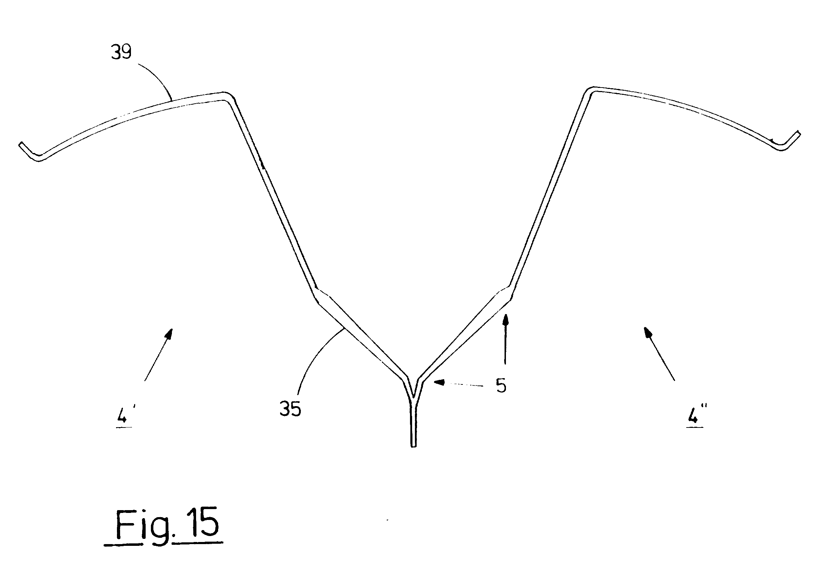

Figur 15 zeigt zwei zusammengehörende Spulenelemente 4', 4'', die aus ein- und demselben Profilblech 39 hergestellt sind. Die Blickrichtung ist parallel zur Rotorachse; demgemäß ist die konisch geformte Oberfläche 35 desjenigen Spulenelementabschnitts, der im Bereich des Kommutators 5 liegt, deutlich sichtbar.

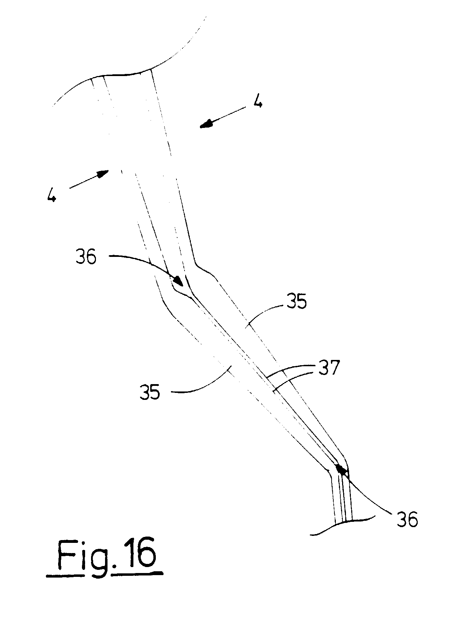

Figur 16 verdeutlicht die erfindungsgemäße konische Ausformung der Kommutator-Spulenelementabschnitte: Die konischen Oberflächen 35 der benachbarten Spulenelemente 4 schließen einen Isolationsspalt 36 ein, dessen Kanten 37 im gesamten Kontaktbereich der Bürsten parallel verlaufen.

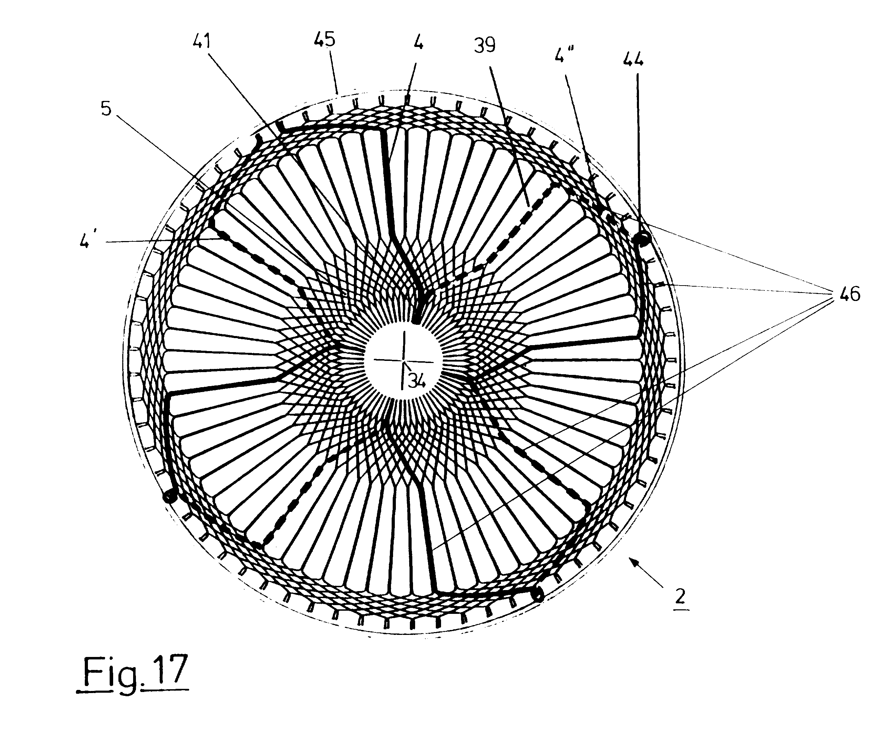

Figur 17 zeigt, wie Figur 14, eine schematische Darstellung eines erfindungsgemäßen Rotors 2 in Blickrichtung der Rotorachse 34. Die Spulenelemente 4 bestehen hier aus Profilblechen 39, die über zwei radiale Ebenen über den Umfang des Rotors 2 verteilt zu jeweils einer Gruppe 46 zusammengefaßt werden können. Die radial innenliegende leitende Verbindung zwischen den Spulenelementen 4 einer Gruppe 46 wird durch die Ausbildung jeweils zweier zusammengehörender Spulenelemente als ein- und dasselbe Profilblech hergestellt; die radial außenliegende Verbindung geschieht mittels u-förmigen Profilblechen 44 über die beiden Ebenen hinweg. Die Stabilität dieser Verbindung auch unter Fliehkräften wird durch das Glasfaserband 45 unterstützt.

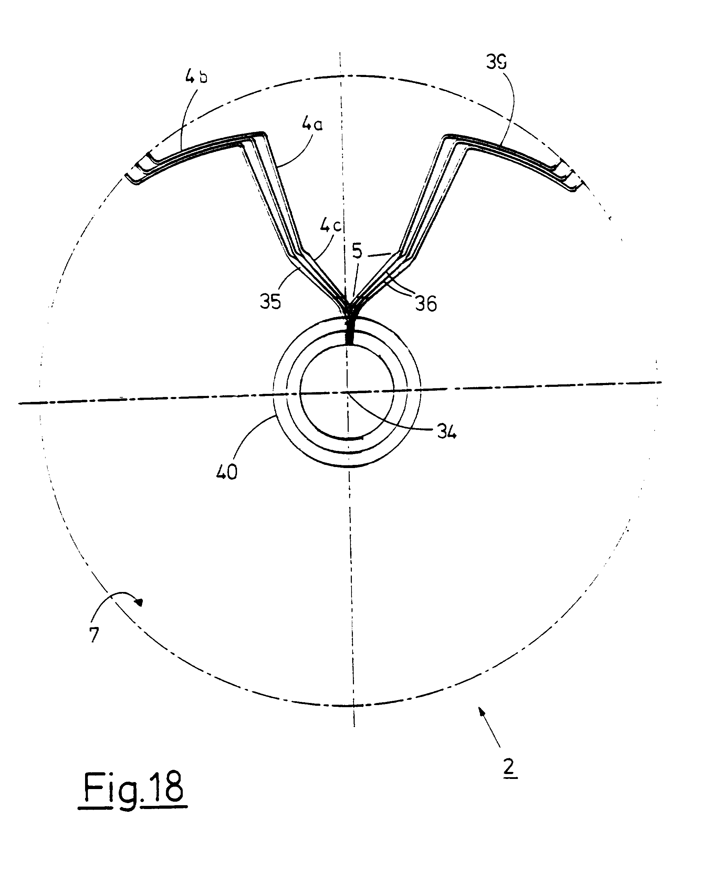

Figur 18 verdeutlicht nochmals, durch die Darstellung von drei benachbarten, jeweils zusammengehörenden Profilelementenpaaren, wie die konischen Oberflächen 35 mit ihren zwischenliegenden Isolationsspalten 36 im Bereich des Kommutators 5 zusammenwirken. Hier ist ferner verdeutlicht, wo der Spannring 40 sitzt, der die Profilbleche 39 in ihrer Lage fixieren soll.

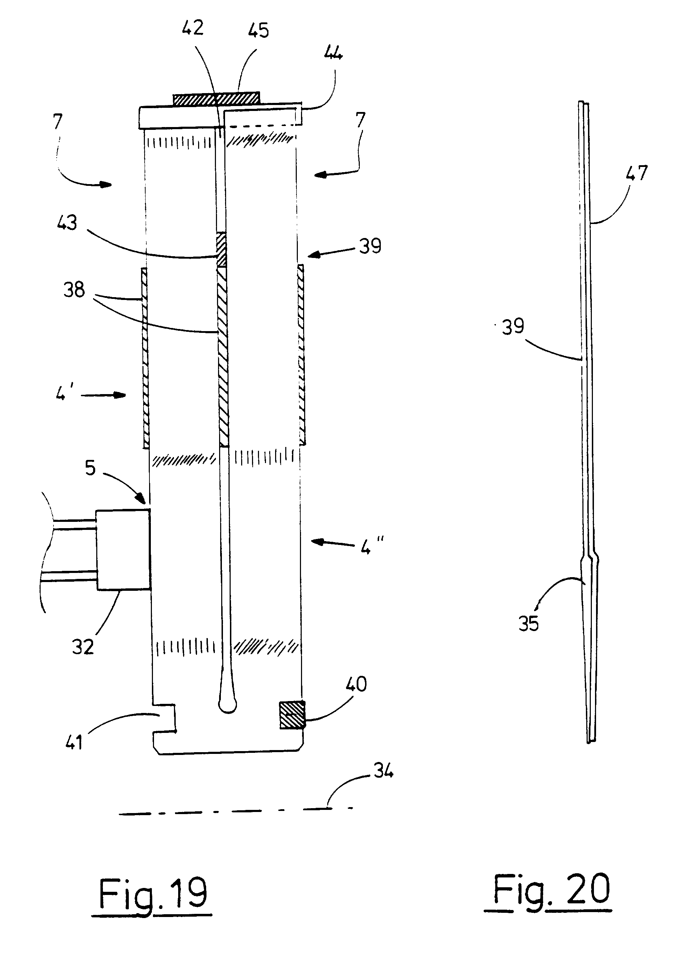

Figur 19 ist die Darstellung zweier zusammengehörender Profilelemente 4' und 4'' in einer Blickrichtung, die zur Rotorachse 34 senkrecht steht; sie korrespondiert mit Figur 15. Deutlich dargestellt ist die Ausformung von zwei zusammengehörenden Spulenelementen 4', 4'' aus ein- und demselben Profilblech 39, das nahezu über seine ganze Länge in der Breite gespalten ist. Der Spalt 42 trennt die beiden Rotorebenen. Die radial innenliegende Verbindung zwischen den jeweils zusammengehörenden Spulenelementen 4', 4'' wird, wie erwähnt, durch die besondere Ausformung der Profilbleche 39 sichergestellt, die radial außenliegende Verbindung erfolgt über u-förmige Profilbleche 44. In dieser Figur sind ferner die Lagen des ferromagnetischen Materials 38 und der Bürsten 32 angedeutet. Das im Spalt 42 aufgewickelte, zur Fixierung des ferromagnetischen Materials 38 dienende Glasfaserband 43, sowie das zur Fixierung der u-förmigen Profilbleche 44 gedachte Glasfaserband 45 sind ebenfalls dargestellt. Das Profilblech 39 weist an jeder Rotorstirnseite 7 Nuten 41 zur Fixierung auf, jedoch nur an der dem Kommutator 5 gegenüberliegenden Rotorstirnseite 7 ist hier ein Spannring 40 darin eingebettet.

Figur 20 zeigt die Ausgangsform der Profilbleche 39, die nach einer biegenden Bearbeitung als Spulenelemente dienen sollen. Dabei ist diejenige Oberfläche sichtbar, die zur Rotorstirnseite hin angeordnet werden soll. Verdeutlicht ist hier wieder die konische Oberfläche 35 desjenigen Abschnitts, der im Bürstenschleifbereich zu liegen kommt. Ferner ist hier die Isolatorschicht 47 dargestellt, die zwischen die Profilbleche 39 zu liegen kommt und diese elektrisch voneinander trennt.

### Bezugszeichenliste

- 1: Antriebswelle
- 2: Rotor
- 3: Scheibenläufer-Maschine
- 4: Spulenelement
- 5: Kommutator
- 6: ringförmiger Abschnitt
- 7: Rotorstirnseite
- 8: Isolationsschicht
- 9: Mitnehmerscheibe
- 10: Mitnehmernasen
- 11: Erhöhungen
- 12: Aussparungen
- 13: Getriebeanschlußabschnitt
- 14: Nut
- 15: Wellenachse
- 16: Konterscheibe
- 17: Konterplatte
- 18: Schraube
- 19: Zentralbohrung
- 20: Isolatorschicht
- 21: Wulst
- 22: Nut
- 23: Kugellager
- 24: Kugellager
- 25: Statorgehäusehälfte
- 26: Statorgehäusehälfte
- 27: Bürstenhalterung
- 28: Rotorsitz
- 29: Eingriffskontur
- 30: Stator
- 31: Befestigungsscheibe
- 32: Bürsten
- 33: Magnetpole
- 34: Rotorachse
- 35: konische Oberfläche
- 36: Isolationsspalt
- 37: Kanten zu 36
- 38: Ferromagnetisches Material
- 39: Profilbleche
- 40: Spannring
- 41: Nut
- 42: Spalt
- 43: Glasfaserband
- 44: U-förmiges Profilblech
- 45: Glasfaserband
- 46: Gruppe
- 47: Isolatorschicht

## Patentansprüche

1. Rotor für eine elektrische Scheibenläufer-Maschine mit einer Antriebswelle (1) zur Kraftübertragung vom und zum Rotor (2) der elektrischen Scheibenläufer-Maschine, wobei der Rotor (2) eine selbsttragende Konstruktion aus mehreren, umfangsverteilt angeordneten,
lamellenartigen Spulenelementen (4) ist, die jeweils radial außen und radial innen leitend miteinander verbunden sind,
wobei ein Kommutator (5) aus einem ringförmigen Abschnitt (6) einer Rotorstirnseite (7) besteht, und wobei zwischen Rotor (2) und Antriebswelle (1) eine Isolationsschicht (8) angeordnet ist,
**dadurch gekennzeichnet, daß** mindestens eine senkrecht zur Wellenachse (15) stehende Mitnehmerscheibe (9) zur form- und/oder kraftschlüssigen Verbindung mit dem Rotor (2) vorgesehen ist, und die lamellenartigen Spulenelemente (4) aus metallischen Profilen gebildet sind und im Kommutator (5) konisch geformte Oberflächen (35) aufweisen, so daß Kanten (37) des Isolationsspalts (36) zwischen je zwei benachbarten Spulenelementabschnitten (4c) mindestens im gesamten Kontaktbereich von Bürsten (32) parallel verlaufen.

2. Rotor nach Anspruch 1,
dadurch gekennzeichnet,
daß die Isolationsschicht (8) zwischen Rotor (2) und Antriebswelle (1), bzw. Mitnehmerscheibe (9), aus einem Kunststoff besteht.

3. Rotor nach Anspruch 1,
dadurch gekennzeichnet,
daß die Isolationsschicht (8) zwischen Rotor (2) und Antriebswelle (1), bzw. Mitnehmerscheibe (9), aus einem Duroplasten besteht.

4. Rotor nach Anspruch 3,
dadurch gekennzeichnet,
daß der Duroplast aus einer glasfaserverstärkten Epoxidharzmischung besteht.

5. Rotor nach mindestens einem der Ansprüche 2 bis 4,
dadurch gekennzeichnet,
daß die Isolationsschicht (8) mit der Mitnehmerscheibe (9) mittels Erhöhungen (11) und Aussparungen (12) formschlüssig verbunden ist.

6. Rotor nach mindestens einem der vorhergehenden Ansprüche,
dadurch gekennzeichnet,
daß die Mitnehmerscheibe (9), und/oder die Isolationsschicht (8) der Mitnehmerscheibe (9) Mitnehmernasen (10) aufweisen, die in die Rotorstirnseite (7) eingreifen.

7. Rotor nach Anspruch 6,
dadurch gekennzeichnet,
daß die Mitnehmernasen (10) entsprechend dem Verlauf der Spulenelementabschnitte im Berührungsbereich der Rotorstirnseite (7) geformt sind.

8. Rotor nach Anspruch 1,
dadurch gekennzeichnet,
daß der Getriebeanschlußabschnitt (13) der Antriebswelle (1) mindestens eine Nut (14) in seinem Umfang aufweist.

9. Rotor nach Anspruch 8,
dadurch gekennzeichnet,
daß der Getriebeanschlußabschnitt (13) im Bereich der Nut (14) eine Querschnittsverjüngung aufweist.

10. Rotor nach Anspruch 9,
dadurch gekennzeichnet,
daß die Querschnittsverjüngung mindestens der Tiefe der Nut (14) entspricht.

11. Rotor nach Anspruch 1,
dadurch gekennzeichnet,
daß nur eine Mitnehmerscheibe (9) starr mit der Antriebswelle (1) verbunden ist, und daß, der rotorseitigen Fläche der Mitnehmerscheibe (9) gegenüberliegend, eine Konterscheibe (16) zur Herstellung einer Preßpassung axial verschiebbar und fixierbar auf der Antriebswelle (1) befestigt ist.

12. Rotor nach Anspruch 11,
dadurch gekennzeichnet,
daß die Konterscheibe (16) ein Innengewinde aufweist und damit in ein korrespondierendes Außengewinde der Antriebswelle (1) eingreift.

13. Rotor nach Anspruch 11,
dadurch gekennzeichnet,
daß die Konterscheibe (16) mit einer Konterplatte (17) verbunden ist, welche das konterscheibenseitige Ende der Antriebswelle (1) überdeckt und in welche ein Schraube (18) eingelassen ist, die in eine Zentralbohrung (19) der Antriebswelle (1) hineinragt und dort in ein korrespondierendes Innengewinde eingreift.

14. Rotor nach Anspruch 11,
dadurch gekennzeichnet,
daß die Konterscheibe (16) zur ihr zugehörigen Rotorstirnseite (7) hin mit einer Isolatorschicht (20) bedeckt ist.

15. Rotor nach Anspruch 1,
dadurch gekennzeichnet,
daß die Antriebswelle (1) zur Befestigung mindestens eines Kugellagers (23) mindestens jeweils eine Wulst (21) und/oder eine Nut (22) aufweist.

16. Rotor nach den Ansprüchen 13 und 15,
dadurch gekennzeichnet,
daß zwischen Konterscheibe (16) und Konterplatte (17) ein Kugellager (24) angeordnet ist.

17. Rotor nach Anspruch 16,
dadurch gekennzeichnet,
daß das mitnehmerscheibenseitige Kugellager (23) mit einer Statorgehäusehälfte (25), das konterscheibenseitige Kugellager (24) mit der Bürstenhalterung (27), und diese wiederum mit der anderen Statorgehäusehälfte (26) der elektrischen Scheibenläufer-Maschine -Maschine (3) verbunden ist.

18. Rotor nach Anspruch 1, dadurch gekennzeichnet, daß im Rotor (2) mehrere, in ihrer radialen Winkelstellung gegeneinander verdrehte und gegeneinander isolierte, stromführende Spulenelemente (4) in einer oder in mehreren verschiedenen, zur Rotorachse (34) senkrechten Ebenen angeordnet sind, wobei die Spulenelemente (4) je mindestens einen radialen Abschnitt (4a) aufweisen, der einen äußeren (4b) und einen inneren Spulenelementabschnitt (4c) verbindet, wobei jeweils mindestens zwei Spulenelemente (4) zu einer über den Umfang des Rotors (2) verteilten Gruppe (46) zusammengefaßt werden können und jedes Spulenelement (4) mit den benachbarten Spulenelementen (4',4") der betreffenden Gruppe (46) jeweils radial außenliegend und gegebenenfalls radial innenliegend leitend verbunden ist,
und wobei der Kommutator (5) durch die auf einer der beiden Rotorstirnseiten (7) liegenden Oberflächen der radial inneren Spulenelementabschnitte (4c) gebildet ist.

19. Rotor nach Anspruch 18,
dadurch gekennzeichnet,
daß zwischen den radialen Abschnitten (4a) der Spulenelemente (4) ferromagnetisches Material angeordnet ist.

20. Rotor nach Anspruch 19,
dadurch gekennzeichnet,
daß das ferromagnetische Material (38) aus Dynamoblechen besteht.

21. Rotor nach einem der Ansprüche 18 bis 20,
dadurch gekennzeichnet,
daß die Spulenelemente (4) Profilbleche (39) sind.

22. Rotor nach Anspruch 21,
dadurch gekennzeichnet,
daß die Profilbleche (39) aus Kupfer bestehen.

23. Rotor nach Anspruch 21,
dadurch gekennzeichnet,
daß die Profilbleche (39) durch mindestens einen Spannring (40) zusammengehalten sind.

24. Rotor nach Anspruch 23,
dadurch gekennzeichnet,
daß die Profilbleche (39) im radial innenliegenden Abschnitt (4c) mindestens eine Nut (41) zur Aufnahme des oder der Spannringe (40) aufweisen.

25. Rotor nach Anspruch 21,
dadurch gekennzeichnet,
daß die Profilbleche (39) mit Gießharz vergossen und so in ihrer Lage zueinander fixiert sind.

26. Rotor nach den Ansprüchen 21 und 23 oder 21 und 25,
dadurch gekennzeichnet,
daß der Körper des Rotors (2) aus der Gesamtheit der in ihrer Lage zueinander fixierten Profilbleche (39) besteht.

27. Rotor nach den Ansprüchen 19 und 26,
dadurch gekennzeichnet,
daß jeweils im Spalt (42) zwischen den verschiedenen radialen Ebenen der Spulenelemente (4) ein Glasfaserband (43) auf dem ferromagnetischen Material (38) aufliegend ein- oder mehrmals über den gesamten Rotorumfang gewickelt und mit Gießharz vergossen ist.

28. Rotor nach Anspruch 18,
dadurch gekennzeichnet,
daß der Rotor (2) der Scheibenläufer eines permanent erregten Elektromotors ist.

29. Rotor nach Anspruch 18,
dadurch gekennzeichnet,
daß der Rotor (2) der Scheibenläufer eines permanent erregten Generators ist.

30. Rotor nach Anspruch 18,
dadurch gekennzeichnet,
daß die Spulenelemente (4) mit den jeweils benachbarten Spulenelementen (4',4'') einer Spulenelementengruppe radial außenliegend verlötet oder verschweißt sind.

31. Rotor nach den Ansprüchen 21 und 30,
dadurch gekennzeichnet,
daß je ein u-förmiges Profilblech über jede Lötstelle geschoben und mitverlötet bzw. mitverschweißt ist.

32. Rotor nach Anspruch 18,
dadurch gekennzeichnet,
daß radial außen ein Glasfaserband (45) über den gesamten Umfang des Rotors (2) gewickelt und mit Gießharz vergossen ist.

33. Rotor nach mindestens einem der Ansprüche 21 bis 32,
dadurch gekennzeichnet,
daß die Profilbleche (39) nahezu über ihre ganze Länge in der Breite gespalten sind, so daß je zwei benachbarte, radial innenliegend leitend verbundene, zur betreffenden Gruppe (46) gehörenden Spulenelemente (4',4'') durch ein und dasselbe Profilblech (39) gebildet sind.

## Claims

1. Rotor for an electric disk armature machine, comprising:
a drive shaft; (1)
and a commutator, (2)
wherein said drive shaft transmits (1) power from and to said rotor of said electric disk armature machine, and further wherein said rotor is a self-supporting construction of a plurality of plate-like coil elements which are distributed along a circumference and which are interconnected radially outside and radially inside so as to be conductive, and further wherein said commutator is formed by an annular portion of one end side of said rotor, and wherein an insulating layer is arranged between said rotor and said drive shaft, caracterized in that at least one driver disk is arranged vertically to a shaft axis for at least one of a positive and a frictional connection with said rotor and said plate like coil elements are formed from metal sections and coil element portions of said commutator have conically shaped surfaces so that the edges of an insulating gap between every two adjacent coil element portions extend parallel to one another at least in an entire region of contact with brushes.

2. Rotor according to Claim 1, wherein said insulating layer between said rotor and said drive shaft and driver disk, respectively, is made of plastic.

3. Rotor according to Claim 1, wherein said insulating layer between said rotor and said drive shaft and driver disk, respectively, is made of a duroplastic.

4. Rotor according to Claim 3, wherein said duroplastic is made of a fiberglass-reinforced epoxy resin mixture.

5. Rotor according to Claims 2 to 4, wherein said insulating layer is connected in a positivelocking manner with said at least one driver disk via protuberances and cut out portions.

6. Rotor according to at least one of the preceding claims, wherein at least one of said at least one driver disk and said insulating layer of said at least one driver disk has driver projections which engage in an end side of said rotor.

7. Rotor according to Claim 6, wherein said driver projections are shaped corresponding to a configuration of portions of said coil elements in a contacting region of said end side of said rotor.

8. Rotor according to Claim 1, wherein a transmission connection portion of said drive shaft has at least one groove in ist circumference.

9. Rotor according to Claim 8, wherein said transmission connection portion has a reduced cross section in a region of said at least one groove.

10. Rotor according to Claim 9, wherein said reduced cross section corresponds at least to a depth of said groove.

11. Rotor according to Claim 1, wherein only one of said at least one driver disk is rigidly connected with said drive shaft, and wherein a counterdisk is fastened on said drive shaft so as to be axially displaceable and securable opposite a surface of said at least one driver disk on a rotor side in order to produce a press fit.

12. Rotor according to Claim 11, wherein said counterdisk has an internal thread and engages therewith in a corresponding external thread of said drive shaft.

13. Rotor according to Claim 11, wherein said counterdisk counterdisk is connected with a counterplate which covers an end of said drive shaft on said counterdisk side and a screw which projects into a central bore hole of said drive shaft and engages in an internal thread therein and which is countersunk in said counterdisk.

14. Rotor according to Claim 11, wherein said counterdisk is covered by an insulating layer toward an end side of said rotor which faces it.

15. Rotor according to Claim 1, wherein said drive shaft has at least one of at least one bead and one groove for securing at least one ball bearing.

16. Rotor according to Claim 13 and 15, wherein a ball bearing is arranged between said counterdisk and said counterplate.

17. Rotor according to Claim 16, wherein a ball bearing on said driver disk side is connected with one half of a stator housing, and wherein a ball bearing on said counterdisk side is connected with a brush holder, and further wherein said brush holder is connected with the other half of said stator housing.

18. Rotor according to Claim 1, wherein said plurality of current conducting coil elements are turned relative to one another in their radial angular position and are insulate relative to one another and are arranged in said rotor in one or more different planes vertical to a rotor axis, wherein said plurality of current conducting coil elements habe at least one radial portion which connects an outer coil element portion with an inner coil element portion, and further wherein at least two coil elements in each instance can be combined to form a group which is distributed along a circumference of said rotor, and further wherein each of said plurality of current conducting coil elements is connected with adjacent coil elements of a respective group radially outside and radially inside so as to be conductive, and wherein said commutator is formed by surfaces of radially inner coil element portions lying on one of two end sides of said rotor.

19. Rotor according to Claim 18, wherein ferromagnetic material is arranged between radial portions of said coil elements.

20. Rotor according to Claim 19, wherein said ferromagnetic material consists of dynamo sheets.

21. Rotor according to any of Claims 18 to 20, wherein said coil elements are section plates.

22. Rotor according to Claim 21, wherein said section plates are made of copper.

23. Rotor according to Claim 21, wherein said section plates are held together by at least one clamping ring.

24. Rotor according to Claim 23, wherein said coil section plates have at least one groove in the radially inner portion for receiving one of said at least one clamping ring.

25. Rotor according to Claim 21, wherein said section plates are sealed with casting resin and are fixed in position relative to one another.

26. Rotor according to Claims 21 and 23 or 21 and 25, wherein a body of said rotor is formed by an entirety of section plates which are fixed in position relative to one another.

27. Rotor according to Claims 19 and 26, wherein a fiberglass strip is wound one or more times around an entire circumference of said rotor in a gap between different radial planes of said coil elements so as to contact said ferromagnetic material and is sealed with casting resin.

28. Rotor according to Claim 18, wherein said rotor is a disk armature of a permanently excited electric motor.

29. Rotor according to Claim 18, wherein said rotor is a disk armature of a permanently excited generator.

30. Rotor according to Claim 18, wherein said coil elements are one of soldered and welded on a radially outer side with the respective adjacent coil elements of a group of coil elements.

31. Rotor according to Claims 21 and 30, wherein a U-shaped section plate is slid over every solder joint and is one of soldered and welded together with the latter.

32. Rotor according to Claim 18, wherein a fiberglass strip is wound over an entire circumference of said rotor radially outside and is sealed with casting resin.

33. Rotor according to at least one of the Claims 21 to 32, wherein said section plates are split in width virtually along their entire length so that every two adjacent coil elements belonging to a same group, which are connected radially inside so as to be conductive, are formed by one and the same of said section plates.

## Revendications

1. Induit d'une machine électrique à rotor en disque avec un arbre primaire (1) pour la transmission d'énergie vers l'induit (2) de la machine électrique à rotor en disque et à partir de celui-ci, où l'induit (2) est une construction portant de soi-même, constituée de plusieurs éléments de bobine (4) en forme de lames placés sur son pourtour, où ces éléments radiaux externes et internes sont tous en connexion conductrice,
où un collecteur (5) est constitué par une section annulaire (6) de la face avant de l'induit (7) et où une couche isolante (8) est placée entre l'induit (2) et l'arbre primaire (1),
caractérisé en ce que
au moins un disque d'entraînement (9) placé à la verticale de l'axe de l'arbre (15) est prévu pour l'adhérence et/ou l'engagement positif avec l'induit (2), les éléments de bobine en forme de lames (4) sont constitués par des profils métalliques et présentent des surfaces (35) de forme conique dans le collecteur (5) si bien que des arrêtes (37) de la fente d'isolation (36) entre deux segments voisins de bobine (4c) sont parallèles, au moins sur toute la section de contact de balais (32).

2. Induit selon revendication 1,
caractérisé en ce que
la couche isolante (8) entre l'induit (2) et l'arbre primaire (1) ou le disque d'entraînement (9) est en plastique.

3. Induit selon la revendication 1,
caractérisé en ce que
la couche isolante (8) entre l'induit (2) et l'arbre primaire (1) ou le disque d'entraînement (9) est un duroplaste.

4. Induit selon la revendication 3,
caractérisé en ce que
le duroplaste est constitué par un mélange de résine époxy renforcé à la fibre de verre.

5. Induit selon au moins une des revendication 2 à 4
caractérisé en ce que
la couche isolante (8) est reliée au disque d'entraînement (9) au moyen d'élévations (11) et d'encoches (12) constituant un engagement positif.

6. Induit selon au moins une des revendications précédentes,
caractérisé en ce que
le disque d'entraînement (9) et/ou la couche isolante (8) du disque d'entraînement (9) présentent des taquets d'entraînement (10) qui sont en prise dans la face avant de l'induit (7).

7. Induit selon la revendication 6,
caractérisé en ce que
la forme des taquets d'entraînement (10) dépend de la forme des éléments de bobine sur la section de contact de la face avant de l'induit (7).

8. Induit selon la revendication 1,
caractérisé en ce que
la section de raccord d'engrenage (13) de l'arbre primaire (1) comporte au moins une encoche (14) sur son pourtour.

9. Induit selon la revendication 8,
caractérisé en ce que
la section de raccord de l'arbre primaire (13) présente une réduction de sa section transversale à hauteur de l'encoche (14).

10. Induit selon la revendication 9
caractérisé en ce que
la réduction de la section transversale correspond au moins à la profondeur de l'encoche (14).

11. Induit selon la revendication 1
caractérisé en ce que
seul un disque d'entraînement est solidaire rigidement de l'arbre primaire (1) et qu'un contre-disque (16), situé en face du disque d'entraînement (9) placé du côté de la face avant de l'induit, est fixé sur l'arbre primaire (1) pour permettre un ajustage serré, ce contre-disque pouvant être déplacé et fixé axialement.

12. Induit selon la revendication 11,
caractérisé en ce que
le contre-disque (16) comporte un filet intérieur lui permettant de se mettre en prise avec un filet extérieur de l'arbre primaire (1).

13. Induit selon la revendication 11,
caractérisé en ce que
le contre-disque (16) est relié à une contre-plaque (17) qui recouvre l'extrémité de l'arbre primaire (1) située du côté du contre-disque et dans laquelle est placée une vis (18) qui pénètre dans un alésage central (19) de l'arbre primaire (1) et y est en prise avec un filet intérieur correspondant.

14. Induit selon revendication 11,
caractérisé en ce que
le contre-disque (16) est recouvert d'une couche isolante (20) du côté tourné vers la face avant de l'induit (7).

15. Induit selon revendication 1,
caractérisé en ce que
l'arbre primaire (1) présente au moins un bourrelet (21) et/ou une encoche (22) pour la fixation d'au moins un palier à roulement à billes (23).

16. Induit selon les revendications 13 et 15,
caractérisé en ce que
un palier à roulement à billes (24) se trouve entre le contre-disque (16) et la contre-plaque (17).

17. Induit selon revendication 16,
caractérisé en ce que
le palier à roulement à billes (23) situé du côté du disque d'entraînement est relié à la moitié du carter du stator (25), le palier à roulement à billes (24) placé du côté du contre-disque est lié à l'attache des balais (27) et celle-ci est reliée à son tour à l'autre moitié du carter du stator (26) de la machine électrique à rotor en disque (3).

18. Induit selon revendication 1,
caractérisé en ce que,
dans l'induit (2), plusieurs éléments de bobine (4) conducteurs à position angulaire radiale opposée et isolés les uns par rapport aux autres sont placés sur un ou plusieurs niveaux verticaux différents par rapport à l'axe de l'induit (34), où les éléments de bobine (4) présentent chacun au moins une section radiale (4a) reliant une section extérieure (4b) et une section intérieure (4c) d'élément de bobine, où il est possible de rassembler au moins deux éléments de bobine (4) en un groupe (46) réparti sur la circonférence de l'induit et chaque élément de bobine (4) est en connexion conductrice avec les éléments de bobines avoisinants (4' et 4 ") du groupe en question (46) placés radialement vers l'extérieur ou, le cas échéant, vers l'intérieur,
où le collecteur (5) est constitué par les surfaces des sections radiales intérieures des éléments de bobine (4c) se trouvant sur une des deux faces avant de l'induit (7).

19. Induit selon la revendication 18,
caractérisé en ce que,
entre les sections radiales (4a) des éléments de bobine (4), se trouve un matériau ferromagnétique.

20. Induit selon la revendication 19,
caractérisé en ce que
le matériau ferrmagnétique (38) est constitué de tôles dynamo.

21. Induit selon une des revendications 18 à 20,
caractérisé en ce que
les éléments de bobine (4) sont des tôles profilées (39).

22. Induit selon la revendication 21,
caractérisé en ce que
les tôles profilées (39) sont en cuivre.

23. Induit selon la revendication 21,
caractérisé en ce que
les tôles profilées (39) sont maintenues ensemble par au moins un collier tendeur (40).

24. Induit selon la revendication 23,
caractérisé en ce que
les tôles profilées (39) comportent sur leur section radiale intérieure (4c) au moins une encoche (41) pour recevoir le ou les collier(s) tendeur(s) (40).

25. Induit selon la revendication 21,
caractérisé en ce que
les tôles profilées (39) sont prises dans de la résine de coulée et maintenues ainsi dans leur position les unes par rapport aux autres.

26. Induit selon les revendications 21 et 23 ou 21 et 25,
caractérisé en ce que
le corps de l'induit (2) est constitué de l'ensemble des tôles profilées (39) dans leur position respective les unes par rapport aux autres.

27. Induit selon les revendications 19 et 26,
caractérisé en ce que,
dans la fente (42) entre les différents niveaux radiaux des éléments de bobine (4), se trouve une bande en fibre de verre (43) placée sur le matériau ferromagnétique (38), enroulée une ou plusieurs fois autour de la circonférence de l'induit et prise dans de la résine de coulée.

28. Induit selon la revendication 18,
caractérisé en ce que
l'induit (2) est la machine électrique à rotor en disque d'un moteur électrique à excitation permanente.

29. Induit selon la revendication 18,
caractérisé en ce que
l'induit (2) est la machine électrique à rotor en disque d'une génératrice à excitation permanente.

30. Induit selon la revendication 18,
caractérisé en ce que
les éléments de bobine (4) sont reliés par brasage ou soudure aux éléments de bobine avoisinants (4', 4") d'un groupe d'éléments de bobine placés radialement à l'extérieur.

31. Induit selon les revendications 21 et 30,
caractérisé en ce que
une tôle profilée en U est placée sur chaque point de soudure et y est fixée par brasage ou soudure.

32. Induit selon la revendication 18,
caractérisé en ce que
une bande en fibres de verre (45) est enroulée sur tout le pourtour extérieur de l'induit (2) et prise dans de la résine de coulée.

33. Induit selon une des revendications 21 à 32,
caractérisé en ce que
les tôles profilées (39) sont fendues, dans la largeur, sur presque toute leur longueur si bien que toute paire d'éléments de bobine (4', 4") avoisinants, placés radialement à l'intérieur, en connection conductrice et appartenant au groupe (46) considéré, est constituée par une seule en même tôle profilée (39).
